# EUROPEAN PATENT SPECIFICATION

(11) **EP 1 500 098 B1**
(45) Date of publication and mention of the grant of the patent: **24.06.2009**
(21) Application number: 03746928.5
(22) Date of filing: 31.03.2003
(51) Int. Cl.: G11B 7/24

(54) **METHOD FOR MAKING LIMITED PLAY DATA STORAGE MEDIA**
VERFAHREN ZUR HERSTELLUNG VON DATENSPEICHERMEDIEN MIT BEGRENZTEM ABSPIELVERMÖGEN
PROCEDE DE FABRICATION DE SUPPORT DE STOCKAGE DE DONNEES A LECTURE LIMITEE

(30) Priority: 22.04.2002 US 374351 P; 10.03.2003 US 384986
(43) Date of publication of application: 26.01.2005
(73) Proprietor: GENERAL ELECTRIC COMPANY, Schenectady, NY 12345 (US)
(72) Inventor: EZBIANSKY, Karin, Ann, Saratoga Springs, NY 12866 (US); OLSON, Daniel, Robert, Voorheesville, NY 12186 (US); SCHOTTLAND, Philippe, Evansville, IN 47712 (US); THOMAS, Verghese, Evansville, IN 47712 (US); WISNUDEL, Marc, Brian, Clifton Park, NY 12065 (US)
(74) Representative: Szary, Anne Catherine
(86) International application number: PCT/US2003/009611
(87) International publication number: WO 2003/090220

(56) References cited:
- EP-A- 0 831 473
- WO-A-02/29801
- WO-A-98/41979
- WO-A1-00/74937
- US-A- 6 117 284

## Description

This application claims rights of priority from U.S. Provisional Patent Application Serial No. 60/374,351, filed April 22, 2002, which is hereby incorporated by reference.

### BACKGROUND OF THE INVENTION

The present invention is related to storage media. More particularly, the present invention is related to limited play storage media.

Optical, magnetic and magneto-optic media are primary sources of high performance storage technology which enables high storage capacity coupled with a reasonable price per megabyte of storage. Use of optical media has become widespread in audio, video, and computer data applications in such formats as compact disc (CD), digital versatile disc (DVD) including multi-layer structures like DVD-5, DVD-9, and multi-sided formats such as DVD-10, and DVD-18, magneto-optical disc (MO), and other write-once and re-writable formats such as CD-R, CD-RW, DVD-R, DVD-RW, DVD+RW, DVD-RAM, and the like, hereinafter collectively "data storage media". In these formats, data are encoded onto a substrate into a digital data series. In prerecorded media for optical media, such as CD, the data are typically pits and grooves formed on the surface of a plastic substrate through a method such as injection molding, stamping or the like.

In some applications, it is desirable to have a limited life for an optical disc. For example, sample computer programs are provided to potential customers in order to entice them to purchase the software. The programs are intended to be used for a limited period of time. Additionally, music and movies are currently rented for a limited time period. In each of these applications and others, when that time has expired, the disc must be returned. A need exists for machine-readable optical discs that do not need to be returned at the end of a rental period. Limited-play discs provide a solution to this problem.

Limited play discs have been produced in various fashions. One method comprised forming a disc where the reflective layer is protected with a porous layer such that the reflective layer becomes oxidized over a pre-determined period of time. Once the reflective layer attains a certain level of oxidation, the disc is no longer readable. The problem with this and other limited play techniques is that these techniques are defeatable. If the method for providing limited play to optical discs can be easily defeated by a customer or a cottage industry, discs would no longer be "limited-play". In the case of a coating or material rendering an optical disc unplayable, for example, facile removal or modification of that coating and/or material could provide a disc with unlimited playability.

There is a great desire on the part of movie studios to protect their intellectual property. Commercialization of limited-play data storage media that can be easily defeated to afford data storage media with unlimited playability would present an unacceptable risk of losing intellectual property.

WO 98/41979 discloses an optical disk adapted for use in an optical readout system of a computer that includes a light source operative to produce an interrogating beam of light for reading data structures, comprising: (a) reflective layer encoded with information stored thereon as a plurality of data structures that are readable by an interrogating beam of light; (b) a substrate disposed in a confronting relationship with said reflective layer; (c) a film of reactive compound superimposed over at least some of said data structures, said reactive compound selected to be of a type which is operative to change physical characteristics in response to a selected stimulus, thereby to affect readability of the data by said interrogating beam of light.

### BRIEF SUMMARY OF THE INVENTION

The present invention provides a method for making limited play optical storage medium for data, said method comprising providing a first substrate and a second substrate; optionally disposing a reactive layer on said first substrate wherein a reactive material in the reactive layer is capable of changing to inhibit readability of the medium; disposing a reflective layer on said second substrate;
optionally disposing a reactive layer on said reflective layer wherein a reactive material in the reactive layer is capable of changing to inhibit readability of the medium; and adhering said first substrate to said second substrate such that the layers are disposed between said first substrate and said second substrate with the proviso that there is at least one reactive layer in the storage medium for data;
**characterized in that** the reactive layer comprises poly(methylmethacrylate/methacrylic acid) and polymethylmethacrylate/leuco methylene blue.

The present invention further provides a method for making a limited play optical storage medium for data, said method comprising providing a first substrate and a second substrate;
disposing a reactive layer on said first substrate;
disposing a reflective layer on said reactive layer; and
adhering said first substrate to said second substrate such that the layers are disposed between said first substrate and said second substrate.

In yet a further embodiment, the present invention provides a method for making a limited play optical storage medium for data, said method comprising providing a first substrate and a second substrate; optionally disposing a reactive layer on said first substrate wherein a reactive material in the reactive layer is capable of changing to inhibit readability of the medium; disposing a semi-reflective layer comprising gold, silver, silver alloy, silicon, or combinations thereof on said first substrate with the proviso that if the reactive layer is disposed on said first substrate, the semi-reflective layer is disposed on said reactive layer; optionally disposing a reactive layer on said semi-reflective layer wherein a reactive material in the reactive layer is capable of changing to inhibit readability of the medium; disposing a reflective layer comprising of metal selected from silver, gold, silicon, titanium, and alloys and mixtures comprising at least one of the foregoing metals, on said second substrate; optionally disposing a reactive layer on said reflective layer; and adhering said first substrate to said second substrate such that the layers are disposed between said first substrate and said second substrate with the proviso that there is at least one reactive layer in said storage medium for data; **characterized in that** the reactive layer comprises poly(methylmethacrylate/methacrylic acid) and polymethylmethacrylate/leuco methylene blue.

### BRIEF DESCRIPTION OF THE DRAWINGS

Figure 1 is absorption spectra of a colorless polycarbonate disc, oxidized leuco methylene blue in a poly(methyl methacrylate) film, and molded substrate discs from 3 polycarbonate formulations containing compounded dyes.
Figure 2 depicts the average reflectivity of a disc coated with a leuco methylene blue solution in ambient room conditions over time.
Figure 3 depicts the reflectivity kinetics for sandwich formatted disc compared to topical and 2-coat topical coatings.
Figure 4 depicts the effect of disc deaeration on the reflectivity kinetics for sandwich formatted discs.
Figure 5 depicts the light transmission characteristics of polycarbonate (PC) based resin formulations for DVD substrates measured in transmission mode at a thickness of 0.6 millimeters.

### DETAILED DESCRIPTION OF THE INVENTION

In this specification and in the claims that follow, reference will be made to a number of terms that shall be defined to have the following meaning.

The singular forms "a", "an" and "the" include plural referents unless the context clearly dictates otherwise.

"Optional" or "optionally" mean that the subsequently described event or circumstance may or may not occur, and that the description includes instances where said event or circumstance occurs and instances where it does not.

Photobleaching of a storage medium for data has been found to be effectively reduced through the use of a polyhydroxy compound in a reactive layer, the use of a light-absorbing layer, or combinations thereof. Upon exposure to oxygen, a reactive material, e.g., leuco methylene blue, which is essentially colorless, is oxidized to form an opaque or semi-opaque layer (e.g., the deep blue dye, methylene blue). Data storage media with the opaque/semi-opaque layer can no longer be played in media players. By adjusting the time it takes to turn opaque, the dye layer can be used to provide limited-play data storage media having the desired life for the given application. Limited-play data storage media prepared solely with the reactive material layer, in this manner, are easily "defeated", e.g., in a photo-bleach test, so that they are no longer "limited-play". The use of a polyhydroxy compound in the reactive layer, a light-absorbing layer, or combinations thereof affords limited-play data storage media that cannot be defeated in the photo-bleach test.

The data storage medium comprises a substrate having low birefringence and high light transmittance at the read laser wavelength, i.e., is readable in an optical media device; a reactive material reactive layer; a data layer; and a reflective layer. Typically, the read laser wavelength is in a range between about 390 nanometers and about 430 nanometers (blue and blue-violet lasers) or in a range between about 630 nanometers and about 650 nanometers (red lasers). The data storage medium may also further comprise a light-absorbing layer and an adhesive layer. The substrate comprises material having sufficient optical clarity, e.g., a birefringence of about ±100 nm or less, to render the data storage material readable in a media device. In theory, any plastic that exhibits these properties can be employed as the substrate. However, the plastic should be capable of withstanding the subsequent processing parameters (e.g., application of subsequent layers) such as sputtering temperatures of about room temperature (about 25°C) up to about 150°C, and subsequent storage conditions (e.g., in a hot car having temperatures up to about 70°C). That is, it is desirable for the plastic to have sufficient thermal stability to prevent deformation during the various layer deposition steps as well as during storage by the end-user. Possible plastics include thermoplastics with glass transition temperatures of about 100°C or greater, with about 125°C or greater preferred, about 150°C or greater more preferred, and about 200°C or greater even more preferred (e.g., polyetherimides, polyetheretherketones, polysulfones, polyethersulfones, polyetherethersulfones, polyphenylene ethers, polyimides, polycarbonates, etc.); with materials having glass transition temperatures greater than about 250°C more preferred, such as polyetherimide in which sulfonedianiline or oxydianiline has been substituted for m-phenylenediamine, among others, as well as polyimides, combinations comprising at least one of the foregoing plastics, and others. Generally, polycarbonates are employed.

Some possible examples of substrate materials include, but are not limited to, amorphous, crystalline, and semi-crystalline thermoplastic materials such as: polyvinyl chloride, polyolefins (including, but not limited to, linear and cyclic polyolefins and including polyethylene, chlorinated polyethylene, polypropylene, and the like), polyesters (including, but not limited to, polyethylene terephthalate, polybutylene terephthalate, polycyclohexylmethylene terephthalate, and the like), polyamides, polysulfones (including, but not limited to, hydrogenated polysulfones, and the like), polyimides, polyether imides, polyether sulfones, polyphenylene sulfides, polyether ketones, polyether ether ketones, ABS resins, polystyrenes (including, but not limited to, hydrogenated polystyrenes, syndiotactic and atactic polystyrenes, polycyclohexyl ethylene, styrene-co-acrylonitrile, styrene-co-maleic anhydride, and the like), polybutadiene, polyacrylates (including, but not limited to, polymethylmethacrylate (PMMA), methyl methacrylate-polyimide copolymers, and the like), polyacrylonitrile, polyacetals, polycarbonates, polyphenylene ethers (including, but not limited to, those derived from 2,6-dimethylphenol and copolymers with 2,3,6-trimethylphenol, and the like), ethylene-vinyl acetate copolymers, polyvinyl acetate, liquid crystal polymers, ethylene-tetrafluoroethylene copolymer, aromatic polyesters, polyvinyl fluoride, polyvinylidene fluoride, polyvinylidene chloride, and tetrafluoroethylenes (e.g., Teflons).

As used herein, the terms "polycarbonate" and "polycarbonate composition" includes compositions having structural units of the formula (I): 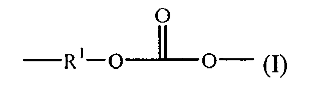 in which at least about 60 percent of the total number of R¹ groups are aromatic organic radicals and the balance thereof are aliphatic, alicyclic, or aromatic radicals. Preferably, R¹ is an aromatic organic radical and, more preferably, a radical of the formula (II):

-A¹-Y¹-A²- (II)

wherein each of A¹ and A² is a monocyclic divalent aryl radical and Y¹ is a bridging radical having zero, one, or two atoms which separate A¹ from A². In an exemplary embodiment, one atom separates A¹ from A². Illustrative, non-limiting examples of radicals of this type are -O-, -S-, -S(O)-, -S(O₂)-, -C(O)-, methylene, cyclohexylmethylene, 2-[2,2,1]-bicycloheptylidene, ethylidene, isopropylidene, neopentylidene, cyclohexylidene, cyclopentadecylidene, cyclododecylidene, adamantylidene, and the like. In another embodiment, zero atoms separate A¹ from A², with an illustrative example being biphenol. The bridging radical Y¹ can be a hydrocarbon group or a saturated hydrocarbon group, for example, methylene, cyclohexylidene or isopropylidene or a heteroatom such as -O- or -S-.

Polycarbonates can be produced by the reaction of dihydroxy compounds in which only one atom separates A¹ and A². As used herein, the term "dihydroxy compound" includes, for example, bisphenol compounds having general formula (III) as follows: 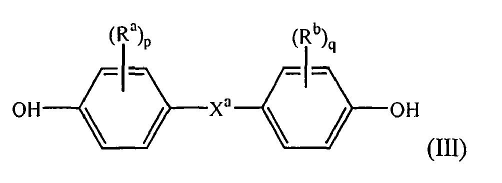 wherein R^{a} and R^{b} each independently represent hydrogen, a halogen atom, or a monovalent hydrocarbon group ; p and q are each independently integers from 0 to 4; and X^{a} represents one of the groups of formula (IV): 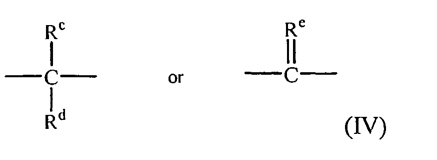 wherein R^{c} and R^{d} each independently represent a hydrogen atom or a monovalent linear or cyclic hydrocarbon group, and R^{e} is a divalent hydrocarbon group.

Some illustrative, non-limiting examples of suitable dihydroxy compounds include dihydric phenols and the dihydroxy-substituted aromatic hydrocarbons such as those disclosed by name or formula (generic or specific) in U.S. Patent No. 4,217,438. A nonexclusive list of specific examples of the types of bisphenol compounds that may be represented by formula (III) includes the following: 1,1-bis(4-hydroxyphenyl) methane; 1,1-bis(4-hydroxyphenyl) ethane; 2,2-bis(4-hydroxyphenyl) propane (hereinafter "bisphenol A" or "BPA"); 2,2-bis(4-hydroxyphenyl) butane; 2,2-bis(4-hydroxyphenyl) octane; 1,1-bis(4-hydroxyphenyl) propane; 1,1-bis(4-hydroxyphenyl) n-butane; bis(4-hydroxyphenyl) phenylmethane; 2,2-bis(4-hydroxy-1-methylphenyl) propane; 1,1-bis(4-hydroxy-t-butylphenyl) propane; bis(hydroxyaryl) alkanes such as 2,2-bis(4-hydroxy-3-bromophenyl) propane; 1,1-bis(4-hydroxyphenyl) cyclopentane; 4,4'-biphenol ;and bis(hydroxyaryl) cycloalkanes such as 1,1-bis(4-hydroxyphenyl) cyclohexane; and the like as well as combinations comprising at least one of the foregoing bisphenol compound.

It is also possible to employ polycarbonates resulting from the polymerization of two or more different dihydric phenols or a copolymer of a dihydric phenol with a glycol or with a hydroxy- or acid-terminated polyester or with a dibasic acid or with a hydroxy acid or with an aliphatic diacid in the event a carbonate copolymer rather than a homopolymer is desired for use. Generally, useful aliphatic diacids have carbon atoms in a range between about 2 and about 40. A preferred aliphatic diacid is dodecandioic acid.

Polyarylates and polyester-carbonate resins or their blends can also be employed. Branched polycarbonates are also useful, as well as blends of linear polycarbonates and branched polycarbonates. The branched polycarbonates may be prepared by adding a branching agent during polymerization.

These branching agents are well known and may comprise polyfunctional organic compounds containing at least three functional groups which may be hydroxyl, carboxyl, carboxylic anhydride, haloformyl, and mixtures comprising at least one of the foregoing branching agents. Specific examples include trimellitic acid, trimellitic anhydride, trimellitic trichloride, tris-p-hydroxy phenyl ethane, isatin-bis-phenol, tris-phenol TC (1,3,5-tris((p-hydroxyphenyl)isopropyl)benzene), tris-phenol PA (4(4(1,1-bis(p-hydroxyphenyl)-ethyl) α,α-dimethyl benzyl)phenol), 4-chloroformyl phthalic anhydride, trimesic acid, benzophenone tetracarboxylic acid, and the like, as well as combinations comprising at least one of the foregoing branching agents. The branching agents may be added at a level in a range between about 0.05 and about 2.0 weight percent, based upon the total weight of the substrate. Examples of branching agents and procedures for making branched polycarbonates are described in U.S. Patent. Nos. 3,635,895 and 4,001,184. All types of polycarbonate end groups are herein contemplated.

Preferred polycarbonates are based on bisphenol A, in which each of A¹ and A² is p-phenylene and Y¹ is isopropylidene. Preferably, the weight average molecular weight of the polycarbonate is in a range between about 5,000 and about 100,000 atomic mass units, more preferably in a range between about 10,000 and about 65,000 atomic mass units, and most preferably in a range between about 15,000 and about 35,000 atomic mass units.

In monitoring and evaluating polycarbonate synthesis, it is of particular interest to determine the concentration of Fries product present in the polycarbonate. The generation of significant Fries product can lead to polymer branching, resulting in uncontrollable melt behavior. As used herein, the terms "Fries" and "Fries product" denote a repeating unit in polycarbonate having the formula (V): 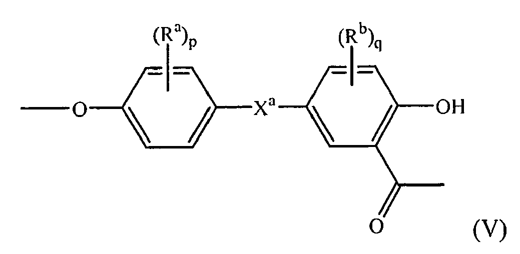 wherein X^{a} is a bivalent radical as described in connection with Formula (III) given above.

The polycarbonate composition may also include various additives ordinarily incorporated in resin compositions of this type. Such additives are, for example, fillers or reinforcing agents; heat stabilizers; antioxidants; light stabilizers; plasticizers; antistatic agents; mold releasing agents; additional resins; blowing agents; and the like, as well as combinations comprising at least one of the foregoing additives.

In order to aid in the processing of the substrate material (e.g., the production of polycarbonate via a melt process) or to control a property of the substrate material (e.g., viscosity), catalyst(s) may also be employed. Possible catalysts include tetraalkylammonium hydroxide, tetraalkylphosphonium hydroxide, and the like, with diethyldimethylammonium hydroxide and tetrabutylphosphonium hydroxide preferred. The catalyst(s) can be employed alone or in combination with quenchers such as acids, e.g., phosphorus acid, and the like. Additionally, water may be injected into the polymer melt during compounding and removed as water vapor through a vent to remove residual volatile compounds.

Data storage media can be produced by first forming the substrate material using a conventional reaction vessel capable of adequately mixing various precursors, such as a single or twin-screw extruder, kneader, blender, or the like. The extruder should be maintained at a sufficiently high temperature to melt the substrate material precursors without causing decomposition thereof. For polycarbonate, for example, temperatures in a range between about 220°C and about 360°C can be used, and preferably in a range between about 260°C and about 320°C. Similarly, the residence time in the extruder should be controlled to minimize decomposition. Residence times of up to about 2 minutes (min) or more can be employed, with up to about 1.5 min preferred, and up to about 1 min especially preferred. Prior to extrusion into the desired form (typically pellets, sheet, web, or the like), the mixture can optionally be filtered, such as by melt filtering, the use of a screen pack, or combinations thereof, or the like, to remove undesirable contaminants or decomposition products.

Once the plastic composition has been produced, it can be formed into the substrate using various molding, processing techniques, or combinations thereof. Possible techniques include injection molding, film casting, extrusion, press molding, blow molding, stamping, and the like. Once the substrate has been produced, additional processing, such as electroplating, coating techniques (spin coating, spray coating, vapor deposition, screen printing, painting, dipping, and the like), lamination, sputtering, and the like, as well as combinations comprising at least one of the foregoing processing techniques, may be employed to dispose desired layers on the substrate. Typically the substrate has a thickness of up to about 600 microns.

An example of a limited play polycarbonate data storage media comprises an injection molded polycarbonate substrate. Other various layers that may be disposed on the substrate include: a data layer, a dielectric layer(s), a reactive layer(s), an adhesive layer(s), a reflective layer(s), a protective layer(s), a second substrate, a light-absorbing layer(s), as well as combinations comprising at least one of the foregoing layers. An optical media, for example, may include a protective layer, a reflective layer, a dielectric layer, and a data layer, with a subsequent dielectric layer in contact with the substrate and a light-absorbing layer disposed on the opposite side of the substrate via an adhesive layer, with the reactive layer disposed between the substrate and the light-absorbing layer. It is understood that the form of the data storage media is not limited to disc shape, but may be any size and shape which can be accommodated in a readout device.

In recordable media, the data are encoded by laser, which illuminates an active data layer that undergoes a phase change, thus producing a series of highly-reflecting or non-reflective regions making up the data stream. In these formats, a laser beam first travels through the substrate before reaching the data layer. At the data layer, the beam is either reflected or not, in accordance with the encoded data. The laser light then travels back through the substrate and into an optical detector system where the data are interpreted. Thus, the data layer is disposed between the substrate and the reflective layer. The data layer(s) for an optical application typically is pits, grooves, or combinations thereof on the substrate layer. Preferably, the data layer is embedded in the substrate surface. Typically, an injection molding-compression technique produces the substrate where a mold is filled with a molten polymer as defined herein. The mold may contain a preform, insert, etc. The polymer system is cooled and, while still in at least partially molten state, compressed to imprint the desired surface features, for example, pits and grooves, arranged in spiral concentric or other orientation onto the desired portions of the substrate, i.e., one or both sides in the desired areas.

Possible data layers for magnetic or magneto-optic applications may comprise any material capable of storing retrievable data and examples include, but are not limited to, oxides (such as silicone oxide), rare earth elements - transition metal alloy, nickel, cobalt, chromium, tantalum, platinum, terbium, gadolinium, iron, boron, others, and alloys and combinations comprising at least one of the foregoing, organic dyes (e.g., cyanine or phthalocyanine type dyes), and inorganic phase change compounds (e.g., TeSeSn, InAgSb, and the like).

The protective layer(s), which protect against dust, oils, and other contaminants, can have a thickness of greater than about 100 microns (µ) to less than about 10Å, with a thickness of about 300Å or less preferred in some embodiments, and a thickness of about 100Å or less especially preferred. The thickness of the protective layer(s) is usually determined, at least in part, by the type of read/write mechanism employed, e.g., magnetic, optic, or magneto-optic. Possible protective layers include anticorrosive materials such as gold, silver, nitrides (e.g., silicon nitrides and aluminum nitrides, among others), carbides (e.g., silicon carbide and others), oxides (e.g., silicon dioxide and others), polymeric materials (e.g., polyacrylates or polycarbonates), carbon film (diamond, diamond-like carbon, and the like), among others, and combinations comprising at least one of the foregoing materials.

The dielectric layer(s), which are typically disposed on one or both sides of the data layer and are often employed as heat controllers, can typically have a thickness of up to or exceeding about 1,000Å and as low as about 200Å or less. Possible dielectric layers include nitrides (e.g., silicon nitride, aluminum nitride, and others); oxides (e.g., aluminum oxide); sulfides (e.g. zinc sulfide); carbides (e.g., silicon carbide); and combinations comprising at least one of the foregoing materials, among other materials compatible within the environment and preferably not reactive with the surrounding layers.

The reflective layer(s) should have a sufficient thickness to reflect a sufficient amount of energy (e.g., light) to enable data retrieval. Typically the reflective layer(s) can have a thickness of up to about 700Å or so, with a thickness in a range between about 300Å and about 600Å generally preferred. Possible reflective layers include any material capable of reflecting the particular energy field, including metals (e.g., aluminum, silver, gold, silicon, titanium, and alloys and mixtures comprising at least one of the foregoing metals, and others).

The reactive layer, which is a coating formulation that comprises both a carrier and a reactive material, should initially have sufficient transmission to enable data retrieval by the data storage media device and subsequently form a layer which inhibits data retrieval by that device (e.g., which absorbs a sufficient amount of incident light, reflected light, or combinations thereof at the wavelength of the laser in the given device). Typically a layer that allows an initial percent reflectivity from the reflective layer of about 50% or greater can be employed, with an initial percent reflectivity of about 65% or greater preferred, and an initial percent reflectivity of about 75% or greater more preferred. Once the media has been exposed to oxygen, e.g., air, for a desired period of time (e.g., the desired allowable play time of the media), the layer preferably comprises a percent reflectivity of about 45% or less, with about 30% or less preferred, about 20% or less more preferred, and about less than 10% especially preferred.

Possible reactive materials include oxygen sensitive leuco or reduced forms of methylene blue, brilliant cresyl blue, basic blue 3, and toluidine 0, as well as reaction products and combinations comprising at least one of the foregoing materials; the structures of which are set forth below:

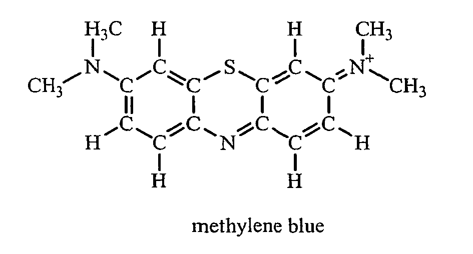

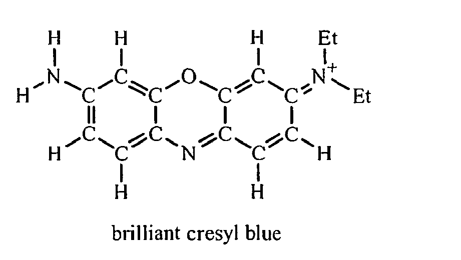

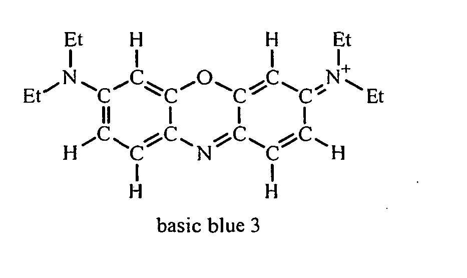

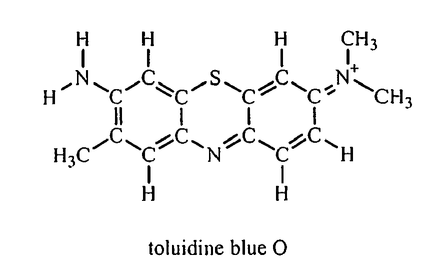

Another possible reactive material comprises a dye which re-oxidizes over approximately 48 hours without a UV coating.

The method of synthesis and the oxygen dependent reoxidation to form the colored form of the methylene blue dye is shown below:

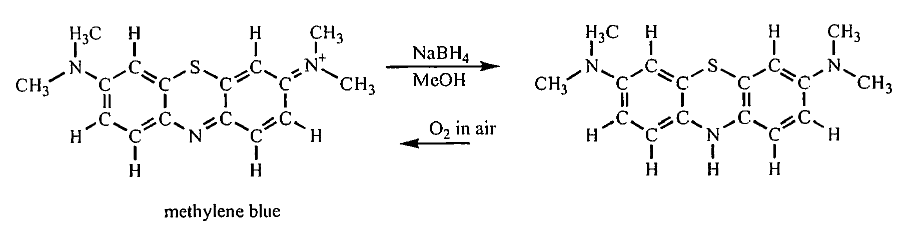

Additionally, the reactive layer may contain at least one photobleaching retarder such as a polyhydroxy compound. Suitable polyhydroxy compounds include biphenols, biphenol derivatives, trihydroxybenzene derivatives, or combinations thereof. The polyhydroxy compound effectively reduces photobleaching. "Effectively reduces photobleaching" as used herein refers to the time it takes to reach critical reflectivity at which the limited play storage medium for data with a polyhydroxy compound stops playing in a media player which is more than the time it takes to reach critical reflectivity at which the limited play storage medium for data without a polyhydroxy compound in the reactive layer stops playing in a media player. Typically, the critical reflectivity is less than about 20%, and more typically, the critical reflectivity is less than about 10%.

Suitable polydihydroxy compounds include those represented by the formula (VI): 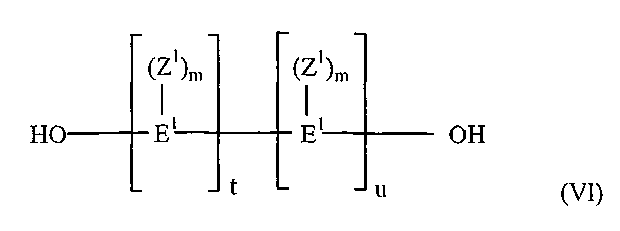 wherein E¹ represents an aromatic group such as phenylene, biphenylene, naphthylene, etc. Z¹ may be an inorganic atom including, but not limited to, halogen (fluorine, bromine, chlorine, iodine); an inorganic group including, but not limited to, nitro; an organic group including, but not limited to, a monovalent hydrocarbon group such as alkyl, aryl, aralkyl, alkaryl, or cycloalkyl, or an oxy group such as OR², wherein R² is a hydrogen or a monovalent hydrocarbon group such as alkyl, aryl, aralkyl, alkaryl, or cycloalkyl. In some particular embodiments Z¹ comprises a halo group or C₁-C₆ alkyl group. The letter "m" represents any integer from and including zero through the number of positions on E¹ available for substitution; "t" represents an integer equal to at least one; and "u" represents zero or an integer equal to at least one with the proviso that if "u" is zero, "m" represents any integer from and including two through the number of positions on E¹ available for substitution.

When more than one Z¹ substituent is present as represented by formula (VI) above, they may be the same or different. The positions of the hydroxyl groups and Z¹ on the aromatic residues E¹ can be varied in the ortho, meta, or para positions and the groupings can be in vicinal, asymmetrical or symmetrical relationship, where two or more ring carbon atoms of the aromatic residue are substituted with Z¹ and hydroxyl groups.

Examples of polyhydroxy compounds include, but are not limited to 4,4'-biphenol, 3,3'-biphenol, 2,2'-biphenol, 2,2',6,6'-tetramethyl-3,3',5,5'-tetrabromo-4,4'-biphenol, 2,2',6,6'-tetramethyl-3,3',5-tribromo-4,4'-biphenol, 3,3'-dimethylbiphenyl-4,4'-diol, 3,3'-ditert-butylbiphenyl-4,4'-diol, 3,3',5,5'-tetramethylbiphenyl-4,4'-diol, 2,2'-ditert-butyl-5,5'-dimethylbiphenyl-4,4'-diol, 3,3'-ditert-butyl-5,5'-dimethylbiphenyl-4,4'-diol, 3,3',5,5'-tetratert-butylbiphenyl-4,4'-diol, 2,2',3,3',5,5'-hexamethylbiphenyl-4,4'-diol, 2,2',3,3',5,5',6,6'-octamethylbiphenyl-4,4'-diol, 3,3'-di-n-hexylbiphenyl-4,4'-diol, 3,3'-di-n-hexyl-5,5'-dimethylbiphenyl-4,4'-diol, 1,2,4-trihydroxybenzene, and the like.

Typically, the polyhydroxy compound is present in a range between about 1 weight % and about 20 weight %, more typically in a range between about 3 weight percent (%) and about 15 weight %, and most typically in a range between about 5 weight % and about 10 weight %, based upon the total weight of the reactive layer.

In addition to the above reactive materials, numerous other dyes and light blocking materials can be synthesized to operate to render the data storage media limited play. For example, some other possible reactive materials can be found in U.S. Patent No. 4,404,257 and U.S. Patent No. 5,815,484. The reactive materials can further comprise a mixture comprising at least one of any of the abovementioned reactive materials.

The amount of reactive material in the reactive layer is dependent upon the desired life of the data storage media. The amount of reactive material in the reactive layer can be as little as about 3 weight percent, with about 4 weight % preferred, based upon the total weight of the reactive layer; with an upper amount of reactive material being about 10 weight %, with about 7 weight % preferred, about 6 weight % more preferred, and about 5 weight % even more preferred.

The reactive material is preferably mixed with a carrier for deposition on, impregnation into, or a combination of deposition on and impregnation into at least a portion of the surface of the substrate to form the reactive layer. The carrier is typically present in a range between about 65% and about 85%, and more typically present in a range between about 70% and about 80%, based upon the total weight of the reactive layer. Possible carriers comprise thermoplastic acrylic polymers, polyester resins, epoxy resins, polythiolenes, UV curable organic resins, polyurethanes, thermosettable acrylic polymers, alkyds, vinyl resins and the like, as well as combinations comprising at least one of the foregoing carriers. Polyesters include, for example, the reaction products of aliphatic dicarboxylic acids including, for example, fumaric or maleic acid with glycols, such as ethylene glycol, propylene glycol, neopentyl glycol, and the like, as well as reaction products and mixtures comprising at least one of the foregoing.

Some epoxy resins, which can be the used as the carrier, include monomeric, dimeric, oligomeric, or polymeric epoxy material containing one or a plurality of epoxy functional groups. Examples include reaction products of bisphenol-A and epichlorohydrin, epichlorohydrin with phenol-formaldehyde resins, and the like. Other organic resins can be in the form of mixtures of polyolefin and polythiols, such as shown by Kehr et al, U.S. Patent Nos. 3,697,395 and 3,697,402.

The term thermoplastic acrylic polymers, as used herein, is meant to embrace within its scope those thermoplastic polymers resulting from the polymerization of one or more acrylic acid ester monomers as well as methacrylic acid ester monomers. These monomers are represented by the general Formula VII:

CH₂ = CWCOOR^{f} (VII)

wherein W is hydrogen or a methyl radical and R^{f} is an alkyl radical, preferably an alkyl radical comprising carbon atoms in a range between about 1 and about 20. Some non-limiting examples of alkyl groups represented by R^{f} include methyl, ethyl, n-propyl, isopropyl, n-butyl, isobutyl, sec-butyl, tert-butyl, pentyl, isopentyl, hexyl, and the like.

Some non-limiting examples of acrylic acid ester monomers represented by Formula VII include: methyl acrylate, isopropyl acrylate, n-propyl acrylate, n-butyl acrylate, isobutyl acrylate, 2-ethylhexyl acrylate, and the like. Some non-limiting examples of methacrylic acid ester monomers represented by Formula VII include: methyl methacrylate, ethyl methacrylate, butyl methacrylate, hexyl methacrylate, isobutyl methacrylate, propyl methacrylate, and the like, as well as reaction products and combinations comprising at least one of the foregoing.

Copolymers of the above acrylate and methacrylate monomers are also included within the term thermoplastic acrylic polymers as it appears herein. Preferably, the thermoplastic acrylic polymer is a copolymer of poly(methyl methacrylate/methacrylic acid). The polymerization of the monomeric acrylic acid esters and methacrylic acid esters to provide the thermoplastic acrylic polymers may be accomplished by any of the known polymerization techniques. The thermoplastic acrylic polymers typically have an inherent viscosity less than about 0.300 centimeters cubed per gram (cm³g⁻¹) and more typically, less than about 0.250 cm³g⁻¹, and most typically, less than about 0.200 cm³g⁻¹.

In order to enhance adhesion of the reactive layer to the substrate, a primer may be employed therebetween. The thermoplastic acrylic polymers useful as primers include: acrylic homopolymers derived from a single type of acrylic acid ester monomer; methacrylic homopolymers derived from a single type of methacrylic acid ester monomer; copolymers derived from two or more different acrylic acid ester monomers, two or more different methacrylic acid ester monomers, or an acrylic acid ester monomer and a methacrylic acid ester monomer; and the like, as well as combinations comprising at least one of the foregoing primers.

Mixtures of two or more of the aforedescribed thermoplastic acrylic polymers, e.g., two or more different acrylic homopolymers, two or more different acrylic copolymers, two or more different methacrylic homopolymers, two or more different methacrylic copolymers, an acrylic homopolymer and a methacrylic homopolymer, an acrylic copolymer and a methacrylic copolymer, an acrylic homopolymer and a methacrylic copolymer, and an acrylic copolymer and a methacrylic homopolymer, and reaction products thereof, can also be used.

Optionally, the reactive layer can be applied to the substrate using various coating techniques such as painting, dipping, spraying, spin coating, screen printing, and the like. For example, the reactive layer can be mixed with a relatively volatile solvent, preferably an organic solvent, which is substantially inert towards the polycarbonate, i.e., will not attack and adversely affect the polycarbonate, but which is capable of dissolving the carrier. Generally the concentration of the carrier in the solvent is about 5 weight % or greater, with about 10 weight % or greater preferred, while the upper range of the polymer is about 25 weight %, with about 20 weight % or less preferred. Examples of some suitable organic solvents include ethylene glycol diacetate, butoxyethanol, methoxypropanol, the lower alkanols, and the like. Generally, the concentration of the solvent in the coating solution is about 70 weight % or greater, with about 75 weight % or greater preferred, while the upper range of the polymer is about 90 weight %, with about 85 weight % or less preferred.

The reactive layer may also optionally contain various additives such as flatting agents, surface active agents, thixotropic agents, and the like, and reaction products and combinations comprising at least one of the foregoing additives.

The thickness of the reactive layer is dependent upon the particular reactive material employed, the concentration thereof in the reactive layer, and the desired absorption characteristics of the layer both initially and after a desired period of time. The reactive layer can have a thickness as low as about 1 micron (µ), with about 2 µ preferred, and about 3 µ more preferred. On the upper end, the thickness can be up to about 15 µ or greater, with up to about 10 µ preferred, and up to about 6 µ more preferred. For example, in order to attain an initial percent reflectivity through the reactive layer of about 50% or greater and a percent reflectivity of about 30% or less after 24 hours, the layer preferably has a thickness in a range between about 1 µ and about 25 µ, with a range between about 2 µ and about 5 µ microns more preferred.

Typically, the reactive layer is disposed between the reflective layer and the second substrate. The reactive layer and reflective layer may be in a sandwich configuration between the first substrate and a second substrate. The reactive layer in a sandwich configuration has a first percentage reflectivity that exceeds a second percentage reflectivity wherein the second percentage reflectivity is a percentage reflectivity for the reactive layer had it not been in a sandwich configuration.

In one embodiment of the present invention, the storage medium is produced in several steps. The steps include providing a first substrate and a second substrate; optionally disposing a reactive layer on the first substrate; disposing a reflective layer on the second substrate; optionally disposing a reactive layer on the reflective layer with the proviso that there is at least one reactive layer in the storage medium for data; and adhering the first substrate to the second substrate such that the layers are disposed between said first substrate and said second substrate.

In another embodiment of the present invention, the storage medium is produced by providing a first substrate and a second substrate; disposing a reactive layer on said first substrate; disposing a reflective layer on said reactive layer; and adhering said first substrate to said second substrate such that the layers are disposed between said first substrate and said second substrate

In yet another embodiment of the present invention, the storage medium is produced by providing a first substrate and a second substrate; optionally disposing a reactive layer on the first substrate; disposing a semi-reflective layer (for example, gold layer, silver, silver alloys, and silicon) on the first substrate with the proviso that if the reactive layer is disposed on the first substrate, the gold layer is disposed on the reactive layer; optionally disposing a reactive layer on the gold layer; disposing a reflective layer on the second substrate; optionally disposing a reactive layer on the reflective layer with the proviso that there is at least one reactive layer in said storage medium for data; and adhering said first substrate to said second substrate such that the layers are disposed between said first substrate and said second substrate.

Typically, the molded substrate is deaerated before the reactive layer is disposed on the substrate. Additionally, the reactants used to make the reactive layer are typically kept in an inert environment. After the storage medium has been produced, the disc is typically kept in an inert environment until the disc is ready for use. Typically, deaeration can occur with any inert gas, for example, nitrogen, argon, or helium.

Another layer that is present is a second substrate. The second substrate is typically a material that satisfies the physical properties given for the first substrate described above. The second substrate may also include a colorant additive such that the second substrate is a light-absorbing layer. The light-absorbing layer typically transmits less than about 90% of light in at least one wavelength a range between about 390 nanometers (nm) and about 630 nanometers. In a further embodiment of the present invention, the light-absorbing layer typically transmits less than about 10% of light in at least one wavelength in a range between about 455 nanometers and about 620 nanometers, and more typically, transmits less than about 10% of light in a range between about 475 nanometers and about 620 nanometers. Most typically, the light-absorbing layer transmits less than about 1% of light in at least one wavelength in a range between about 550 nanometers and about 620 nanometers. In a further embodiment of the present invention, the light-absorbing layer typically transmits less than about 60% of light in at least one wavelength in a range between about 390 nanometers and about 435 nanometers, more typically transmits less than about 40% of light in at least one wavelength in a range between about 390 nanometers and about 435 nanometer, and most typically less than about 10% of light in at least one wavelength in a range between about 390 nanometers and about 435 nanometers. The light-absorbing layer is disposed between the reactive layer and the laser beam. Typically the light-absorbing layer has a thickness of up to about 600 microns.

Typically, a colorant or combination of colorants is present in the light-absorbing layer. The colorant is typically present in a range between about 0.00001 weight % and about 2 weight %, more typically, in a range between about 0.001 weight % and about 1 weight %, and most typically, in a range between about 0.01 weight % and about 0.5 weight %, based on the total weight of the light-absorbing layer. Colorants are also preferably selected so that they solubilize in the material used to form the layer in which the colorant is disposed. Colorants that are soluble in the materials used for DVD layers include dyes (e.g., "solvent dyes"), organic colorants, pigments, and the like, which behave like dyes; i.e., colorants that disperse in the plastic and do not form aggregates having a size greater than or equal to about 200 nm, with an aggregate size less than or equal to about 50 nm preferred. Some suitable colorants include, but are not limited to, those of the chemical family of anthraquinones, perylenes, perinones, indanthrones, quinacridones, xanthenes, oxazines, oxazolines, thioxanthenes, indigoids, thioindigoids, naphtalimides, cyanines, xanthenes, methines, lactones, coumarins, bis-benzoxaxolylthiophenes (BBOT), napthalenetetracarboxylic derivatives, monoazo and disazo pigments, triarylmethanes, aminoketones, bis(styryl)biphenyl derivatives, and the like, as well as combinations comprising at least one of the foregoing colorants.

The following is a partial list of commercially available, suitable dyes.
Color Index Solvent Red 52
Color Index Solvent Red 207
Color Index Disperse Orange 47
Color Index Solvent Orange 60
Color Index Disperse Yellow 54
Color Index Disperse Yellow 201
Color Index Pigment Yellow 138
Color Index Solvent Violet 36
Color Index Solvent Violet 13
Color Index Disperse Violet 26
Color Index Solvent Blue 97
Color Index Solvent Blue 59
Color Index Solvent Green 3
Color Index Solvent Green 28
Color Index Solvent Red 135
Color Index Solvent Red 179
1,5-dihydroxy-4,8-bis(phenylamino)-9,10-anthracenedione

An adhesive layer may also be present which can adhere any combination of the above-mentioned layers. The adhesive layer can comprise any material which is capable of forming a layer penetrable by oxygen and which does not substantially interfere with the transfer of light through the media from and to the data retrieval device (e.g., that is substantially transparent at the wavelength of light utilized by the device, and/or which allows a reflectivity from the media of about 50% or greater, with a percent reflectivity of about 65% or greater preferred and a percent reflectivity of about 75% or greater more preferred). Possible adhesive materials include UV materials such as acrylates (e.g., cross-linked acrylates, and the like) silicon hardcoats, and the like, as well as reaction products and combinations comprising at least one of the foregoing materials. Other examples of UV materials are described in U.S. Patent Nos. 4,179,548 and 4,491,508. Some useful polyfunctional acrylate monomers include, for example, diacrylates of the formulas: 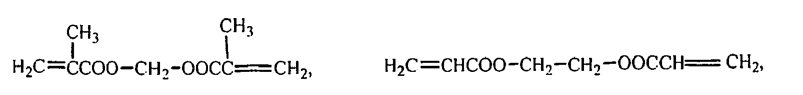 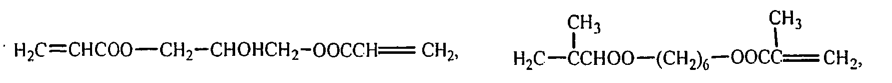 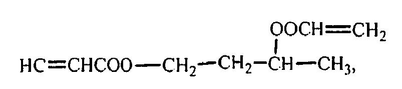 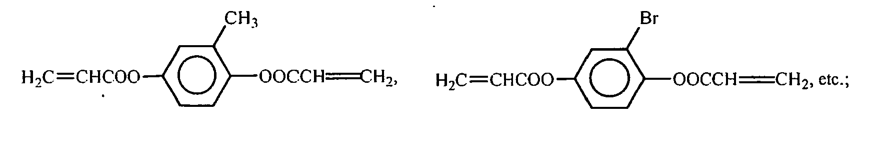 triacrylates of the formulas, 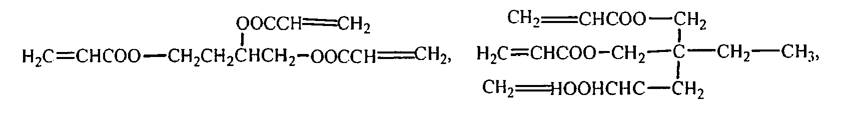 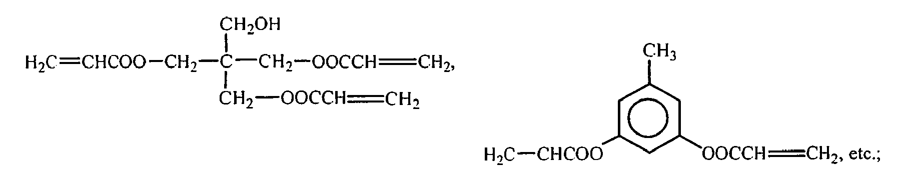 tetraacrylates of the formula,

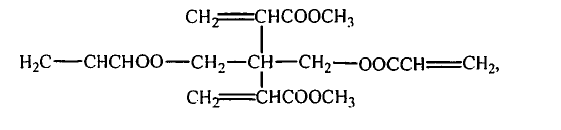

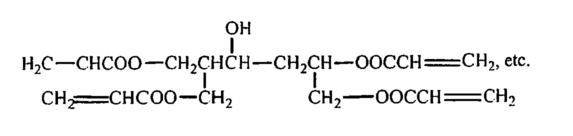

Although the adhesive layer may contain only one of said polyfunctional acrylate monomers, or a mixture comprising at least one of the polyfunctional acrylate monomers (and the UV light reaction product thereof), preferred coating compositions contain a mixture of two polyfunctional monomers (and the UV light reaction product thereof), preferably a diacrylate and a triacrylate (and the UV light reaction product thereof), with minor amounts of mono-acrylate used in particular instances. Optionally, the adhesive coating can comprise nonacrylic UV curable aliphatically unsaturated organic monomers in amounts up to about 50 weight % of the uncured adhesive coating that includes, for example, such materials as N-vinyl pyrrolidone, styrene, and the like, and reaction products and combinations comprising at least one of the foregoing materials.

When the adhesive layer comprises a mixture of acrylate monomers, it is preferred that the ratio, by weight, of the diacrylate to the triacrylate be in a range between about 10/90 and about 90/10. Exemplary mixtures of diacrylate and triacrylates include mixtures of hexanediol diacrylate with pentaerythritol triacrylate, hexanediol diacrylate with trimethylolpropane triacrylate, diethylene glycol diacrylate with pentaerythritol triacrylate, and diethylene glycol diacrylate with trimethylolpropane triacrylate, and the like.

The adhesive layer can also comprise a photosensitizing amount of photoinitiator, i.e., an amount effective to affect the photocure of the adhesive coating. Generally, this amount comprises about 0.01 weight %, with about 0.1 weight % preferred, up to about 10 weight %, with about 5 weight % preferred, based upon the total weight of the adhesive coating. Possible photoinitiators include blends of ketone-type and hindered amine type materials that form suitable hard coatings upon exposure to UV radiation. It is preferable that the ratio, by weight, of the ketone compound to the hindered amine compound be about 80/20 to about 20/80. Ordinarily, about 50/50 or about 60/40 mixtures are quite satisfactory.

Other possible ketone-type photoinitiators, which preferably are used in a nonoxidizing atmosphere, such as nitrogen, include: benzophenone, and other acetophenones, benzil, benzaldehyde and 0-chlorobenzaldehyde, xanthone, thioxanthone, 2-clorothioxanthone, 9,10-phenanthrenenquinone, 9,10-anthraquinone, methylbenzoin ether, ethylbenzoin ether, isopropyl benzoin ether, α,α-diethoxyacetophenone, α,α-dimethoxyacetophenone, 1-phenyl-1,2-propanediol-2-o-benzoyl oxime, α,α-dimethoxy-α-phenylacetopheone, phosphine oxides, and the like.

Further included are reaction products and combinations comprising at least one of the foregoing photoinitiators.

The photocure of the adhesive layer may also be affected by the light- absorbing layer. When a light-absorbing layer is used that transmits more than about 5% of light in at least one wavelength in a range between about 330 nanometers and about 390 nanometers, or more preferably, transmits more than about 10% of light in at least one wavelength in a range between about 360 nanometers and about 370 nanometers, the adhesive layer has an improved bonding capability. When the adhesive layer has an "improved bonding capability", the time it takes the storage medium for data to reach 45% reflectivity exceeds the time is takes a storage medium for data to reach 45% reflectivity with a light-absorbing layer that absorbs light that falls outside the above-mentioned range.

The adhesive layer may also optionally comprise flatting agents, surface active agents, thixotropic agents, UV light stabilizers, UV absorbers and/or stabilizers such as resorcinol monobenzoate, 2-methyl resorcinol dibenzoate, and the like, as well as combinations and reaction products comprising at least one of the foregoing. The stabilizers can be present in an amount, based upon the weight of the uncured UV layer of about 0.1 weight %, preferably about 3 weight %, to about 15 weight %.

In order that those skilled in the art will be better able to practice the invention, the following examples are given by way of illustration and not by way of limitation.

### Example 1

This example describes preparation of PMMA/oxidized leuco methylene blue coating solution.

A solution of PMMA in 1-methoxy-2-propanol was prepared by adding 111 grams of Elvacite 2008 poly (methyl methacrylate) from Ineos Acrylics (inherent viscosity of 0.183 cm³g⁻¹) to 450 grams of 1-methoxy-2-propanol in a bottle and rolling on a roller mill to effect dissolution. The solution was transferred to a flask and heated to about 80°C while a slow stream of about 100 (cubic centimeters per minute) cc/min of nitrogen was passed over the surface of the solution. The deaerated solution was transferred using nitrogen pressure to a de-aerated bottle closed with a rubber septum using a cannula tube.

A leuco methylene blue solution was prepared by combining 4.85 grams of methylene blue trihydrate and 2.05 grams of camphor sulfonic acid with 148.3 grams of 1-methoxy-2-propanol in a 250 milliliter (mL) flask equipped with a rubber septum. The stirred mixture was heated in a 90°C water bath while a stream of nitrogen was passed into the flask at a rate of about 100 cc/min using syringe needles for both the nitrogen inlet and for an outlet. While hot (80°C), 20.9 grams of Tin (II) 2-ethylhexanoate was added by syringe to reduce the methylene blue to the dark amber leuco methylene blue. To the solution was added 1.1 mL of flow additive BYK-301 from BYK Chemie. Said solution was transferred to the abovedescribed de-aerated PMMA solution using a cannula tube.

The PMMA/leuco methylene blue coating solution was allowed to stand in air for greater than 1 week during which time the leuco methylene blue oxidized to form methylene blue, i.e. poly (methyl methacrylate)/oxidized leuco methylene blue.

### Example 2

This example illustrates the preparation of a disc coated with poly (methyl methacrylate)/oxidized leuco methylene blue. Approximately 3 mL of the Example 1 PMMA/oxidized leuco methylene blue coating solution was applied as a ring around the inner diameter of a DVD held on a spin coater. After spin coating at 600 revolutions per minute (rpm) for 60 seconds, the coating was tack-free and very blue.

### Example 3

Reflectivity of the Example 2 disc was measured using a dr. shenk PROmeteus instrument, model MT-136E. A number of discs were prepared using the Example 2 procedure and their reflectivities were measured using the dr. shenk PROmeteus instrument. The initial average reflectivities ranged from 4.9% to 8.3%.

### Example 4

A weathering rack was placed on the ground such that samples would face south at a 45° angle to the ground. The samples were mounted on wood or polystyrene between 3 feet and 8 feet from the ground. Samples were exposed in August, September, or October in Schenectady, NY.

### Example 5

Absorption spectra were measured in a Unicam UV3 UV/Vis spectrometer by placing the light filter in the sample beam and nothing in the reference beam.

### Examples 6

This example describes the experimental procedure for results presented for solutions of PMMA/methylene blue in 1-methoxy-2-propanol (Example 1) containing the following additives: 4, 4'-biphenol, di- *tert*-butyl-4-methyl phenol (BHT), and 3,5,3',5'-tetramethyl-4,4'-biphenol.

A solution was prepared containing 20.0g of a methylene blue/PMMA mixture such as that described in example 1 and 0.3 g 4, 4'-biphenol. Two additional solutions were prepared similarly but adding 0.3 g of BHT and 0.3 g of 3,5,3',5'-tetramethyl-4,4'-biphenol, respectively. A stir bar was placed in each container, and solutions were stirred for 24 hours.

Three films from each solution were spun-coated onto an aluminized polycarbonate half DVD disc (3 mL aliquot, 600 rpm, 60 seconds). Three additional films were spun from a solution containing no additional additives; these three samples served as controls. Next, 5 mL of Daicure SD698 (Dai Nippon) bonding adhesive was dispensed on the inner diameter of the half discs. A clear colorless polycarbonate half disc was placed on top and the "sandwich" was spun (1500 rpm, 20 s). Immediately after the spinning was complete, the disc was cured using a Fusion UV Systems, INC. UV light system (1.1 J/cm², 1.6 W/cm²). This process was repeated for each sample.

Initial reflectivities were measured as described in Example 3. Samples were placed on the weathering rack as described in Example 4. Final reflectivity measurements were taken as described in Example 3. Results were compared to that of the control samples and can be seen in Table 1.

**Table 1**

| **Sample** | Initial % Reflectivity | % Reflectivity After 3 Days Outdoor Exposure |
|---|---|---|
| No 4,4'-biphenol | 8.3 | 51.3 |
| 4,4'-biphenol | 7.9 | 13.5 |
| BHT | 4.7 | 29.2 |
| 3,5,3',5'-tetramethyl-4,4'-biphenol | 4.4 | 15.9 |

DVDs made with a biphenol in the reactive layer have significantly improved photobleaching resistance when compared to a DVD no biphenol derivative or a DVD with an anti-oxidant (BHT) in the reactive layer. Use of biphenol or derivative thereof provided a unique and dramatic improvement in photobleaching resistance.

### Example 7

A sandwich disc was made in the manner of Example 6 using a solution made by combining 15 parts by weight (pbw) of Example 1 solution with 0.05 pbw of 1,2,4-trihydoxybenzene. Bonding was accomplished using Daicure SD698 spun at 1260 rpm for 20 seconds followed by a 21 second cure in a UV processor equipped with a D bulb. The reflectivity of the sample was 4.33% initially and 7.61% after 20 hours exposure in xenon arc weather-o-meter whereas a control sample prepared in the same way without trihydroxybenzene had a reflectivity of 27.8% after this exposure. The initial reflectivity of the sample without trihydroxybenzene was 4.39%.

### Example 8

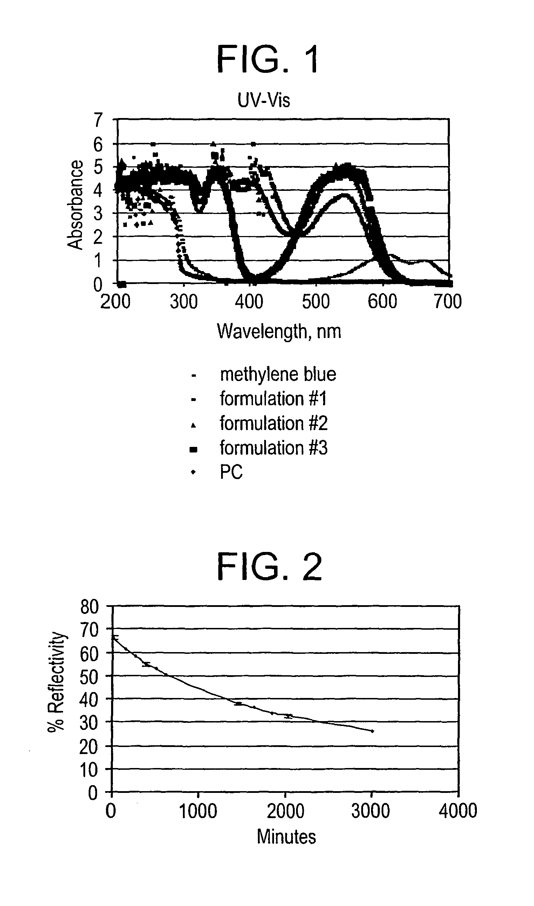

This example illustrates the preparation of discs with improved photobleach resistance using molded light-absorbing layers from 3 polycarbonate formulations containing compounded dyes. The absorption spectra of the dye-containing light-absorbing layers are shown in Figure 1 and were measured using the Example 5 procedure. Four polycarbonate aluminized substrates were coated using the Example 1 solution and the Example 2 procedure. A "control" sample was prepared by applying 5 mL of Daicure SD698 (Dai Nippon) bonding adhesive on the inner diameter on one of the substrates, placing a colorless polycarbonate layer on top, and spinning at 1500 ipm for 20 seconds. Immediately after the spinning was complete, the disc was cured using a Fusion UV Systems, INC. UV light system (1.1 J/cm², 1.6 W/cm²). This process was repeated using the dye-containing light-absorbing polycarbonate layer in place of the colorless polycarbonate layer. Results of reflectivity measurements from DVDs made using dye formulations in the polycarbonate before and after 3 days of outdoor exposure to sunlight are shown in Table 2.

**Table 2**

| **Sample** | Initial % Reflectivity | % Reflectivity After 3 Days Outdoor Exposure |
|---|---|---|
| Control | 4.5 | 34.2 |
| Formulation 1 | 4.6 | 5.9 |
| Formulation 2 | 3.5 | 4.7 |
| Formulation 3 | 4.6 | 8.7 |

DVDs made with the dye-containing light-absorbing layer have significantly improved photobleaching resistance when compared to a DVD without the light-absorbing layer. Use of a light-absorbing layer provides a unique and dramatic improvement in photobleaching resistance.

### Example 9

Using the procedures of Examples 6 and 8, a control disc was prepared with no additives in the PMMA/oxidized leuco methylene blue coating and a colorless polycarbonate layer. Concurrently, a disc was prepared with 4,4'-biphenol in the PMMA/oxidized leuco methylene blue coating as in Example 6 and with dye Formulation 3 light-absorbing polycarbonate layer. The samples were weathered using the Example 4 procedure. The reflectivity of the disc was initially 4.4% and was 5.0% after 9 days of outdoor exposure whereas a control disc made from colorless polycarbonate layer and no 4,4'-biphenol, which also has an initial reflectivity of 4.4%, had a reflectivity of 43.7% after the same exposure.

### Example 10

A solution of PMMA in 1-methoxy-2-propanol was prepared by adding 60 grams of Elvacite 2010 poly(methyl methacrylate) from Ineos Acrylics to 300 grams of 1-methoxy-2-propanol in a bottle and rolling on a roller mill to effect dissolution. The solution was transferred to a flask and heated to ∼80° C while a slow stream of nitrogen (100 cc/min) was passed over the surface of the solution. The deaerated solution was transferred using nitrogen pressure to a de-aerated bottle closed with a rubber septum using a cannula tube.

A leuco methylene blue solution was prepared by combining 1.2 grams of methylene blue trihydrate and 0.80 grams of camphor sulfonic acid with 40 grams of 1-methoxy-2-propanol in a 100-mL flask equipped with a rubber septum. The stirred mixture was heated in a 90° C water bath while a stream of nitrogen (100 cc/min) was passed into the flask using syringe needles for both the nitrogen inlet and for an outlet. While hot (80°C), 4.2 mL of Tin (II) 2-ethylhexanoate was added by syringe to reduce the methylene blue to the dark amber leuco methylene blue. To the solution was added 0.6 mL of flow additive BYK-301 from BYK Chemie. To make the PMMA/leuco methylene blue coating solution, the leuco methylene blue solution above was drawn into a syringe and then injected into the PMMA solution after having been passed through a 0.2-micron syringe filter.

### Example 11

Approximately 3.5 mL of the Example 10 PMMA/leuco methylene blue coating solution was applied as a ring around the inner diameter of a DVD held on a spin coated and spun at 500 rpm for 60 seconds; the coating was tack-free and essentially colorless. The coating thickness ranged from about 4 microns to about 5 microns from the inner radius to the outer radius of the disc. However, during the spinning, a collection of "spider webs" (very thin strands of polymer) collected in the spin bowl. In addition, approximately 50 polymer strands were attached to the edge of the disc ranging in size up to approximately 12 mm in length. (from RD 29789)

Although the present invention is not dependent upon theory, the viscosity of the thermoplastic acrylic polymers may promote and affect the processability of the reactive coating. Hence, thermoplastic acrylic polymers with a viscosity less than about 0.300 cm³g⁻¹ did not form polymer strands during the spin process used to coat the disc.

### Example 12

Approximately 3 mL of the Example 10 PMMA/leuco methylene blue coating solution was applied as a ring around the inner diameter of a DVD held on a spin coater. After spin coating at 500 rpm for 60 seconds, the coating was tack-free and essentially colorless. The disc was placed a DVD player and was completely playable.

### Example 13

The coated disc from Example 12 was allowed to stand at ambient room conditions during which time average % reflectivity was measured at various times using a dr. shenk PROmeteus instrument, model MT-136E. As the % reflectivity dropped the color of the disc turned from essentially colorless to blue. Results can be seen in Figure 2.

After the disc had been in air for about 1 week, it was very blue and would not play in a DVD player.

### Example 14

The solution of Example 1 was used to apply a PMMA/leuco methylene blue basecoat to a 0.6 millimeter (mm) unmetalized polycarbonate first substrate using a spin coater at 800 rpm for 60 seconds. The average coating thickness was found to be about 3 microns. After one of the discs with the PMMA/leuco methylene blue basecoat had been stored overnight in a nitrogen chamber, UV resin Daicure SD-640 was dispensed in a thin ring to the middle of an aluminum metalized second substrate. Then, the first substrate with the PMMA/leuco methylene blue basecoat was bonded on top the second substrate disc with the ring of UV resin. The sandwich was spun at 1000 rpm for 10 seconds to disperse the UV adhesive evenly. The sandwich was then passed under a flash Xenon UV lamp for 25 seconds. The sandwich was then stored in a nitrogen chamber for at least 48 hours.

### Example 15

The solution was prepared as in Example 14; the solution was used to apply a PMMA/leuco methylene blue basecoat to a 0.6 mm aluminum metalized polycarbonate first substrate using a spin coater at 800 rpm for 60 seconds. The average coating thickness was found to be about 3 microns. After the first substrate with the PMMA/leuco methylene blue basecoat had been stored overnight in a nitrogen chamber, UV resin Daicure SD-640 was dispensed in a thin ring to the middle of the previously coated metalized first substrate. Then, an unmetalized polycarbonate second substrate was placed on top the first substrate with the ring of UV resin. The sandwich was spun at 1000 rpm for 10 seconds to disperse the UV adhesive evenly. The sandwich was then passed under a flash Xenon UV lamp for 25 seconds. The sandwich was then stored in a nitrogen chamber for at least 48 hours.

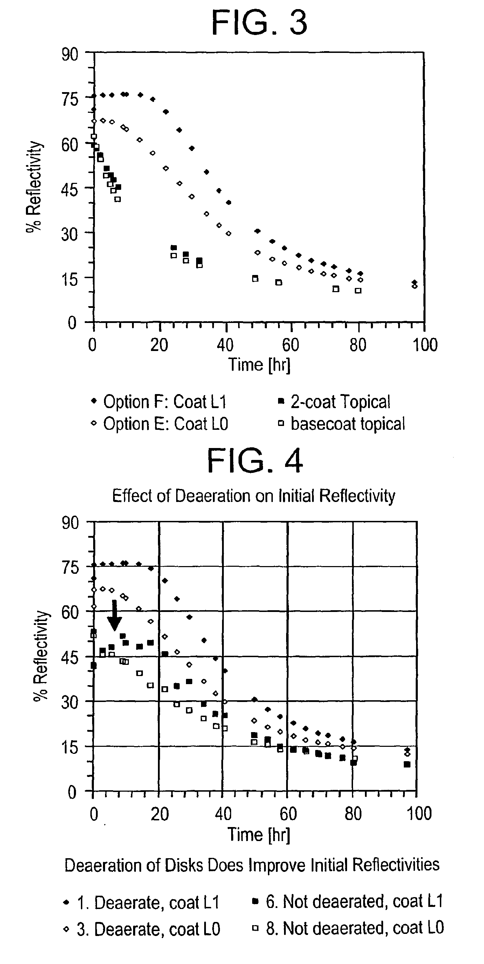

The kinetics of oxidation of a disc with just the basecoat, that of another with the UV topcoat on the basecoat, and those of the sandwich configurations (Example 14 labelled as Option E and Example 15 labelled as Option in Figures 3 and 4) were determined in the manner of Example 13. The results are shown in Figure 3.

Figure 3 shows the reflectivity kinetics for the sandwich disks after exposure to air at room temperature. The position of the dye coating in the sandwich had a dramatic effect on the kinetics "lag time"-the time at which the reflectivity begins to decay rapidly from an initial steady value. Coating the metalized polycarbonate (option F) had the longest lag time, as O₂ had to diffuse through polycarbonate and bonding adhesive before it could oxidize the dye. This resulted in a time of 38 hrs to reach a reflectivity of 45%. Coating the unmetalized polycarbonate (option E) had a shorter lag time, as O₂ only has to diffuse through the polycarbonate substrate. This results in a time of 27 hrs to reach a reflectivity of 45%. It was surprising to discover that both the polycarbonate substrate and bonding adhesive were barriers to O₂ diffusion. Also surprising was the discovering that the kinetics curves for the topical coatings, also shown as a comparison, were much faster than for option E. Finally, it was also surprising that the initial reflectivities were higher for option F than for option E. Presumably, dye in the option E configuration is more susceptible to premature oxidation during handling in the coating & bonding process than the dye in option F which is more protected by the adhesive layer.

Figure 4 shows the reflectivity kinetics curves for both the Example 15, Option F, and Example 14, Option E, dye-coated options using half substrates that were either deaerated with N₂ prior to coating or coated as received (with dissolved O₂). Unfortunately, it appears that there is sufficient exposure time for dissolved O₂ to react with the leuco methylene blue dye to cause low initial reflectivities. An advantage of any of the sandwich configurations over the 2-coat topical coating is that the time required to fully deaerate a 0.6 mm polycarbonate substrate is up to 4 times faster than for a 1.2 mm thick bonded DVD.

### Example 16

Formulations A, B, C, and D were blended and then extruded using a single screw extruder at a melt temperature of 290°C and pelletized. Substrates (0.6 mm disc halves) were molded from the pelletized material after drying in an oven for 4 hours at 120° C. Sumitomo SD30 Molding Machines with Seiko Geikin DVD Molds were used for the molding operation.

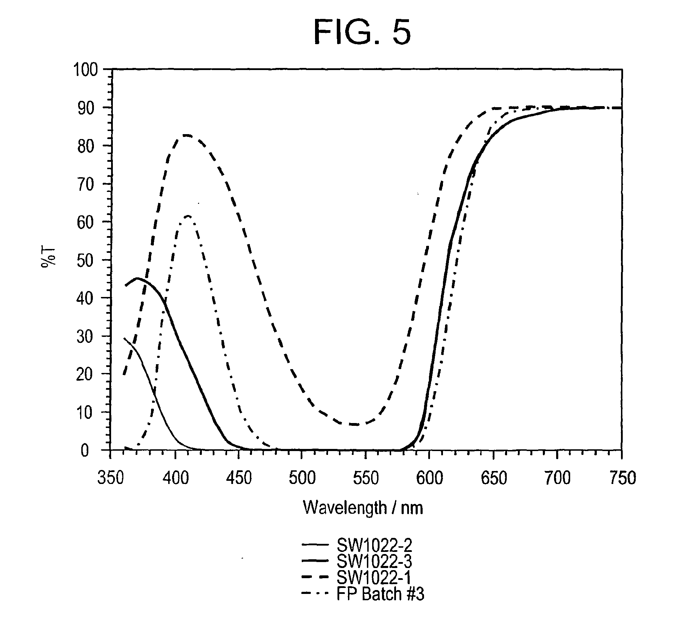

The light transmission characteristics of these substrates are summarized in Table 3 below and can also be seen in Figure 5.

**Table 3**

| Formulation | A | B | C | D |
|---|---|---|---|---|
| %T @ 650 nm | 85.70 | 89.35 | 82.56 | 83.42 |
| %T @ 630 nm | 67.42 | 85.43 | 70.77 | 72.57 |
| %T @ 600 nm | 8.42 | 56.10 | 17.11 | 15.06 |
| %T @ 550 nm | 0.02 | 7.05 | 0.02 | 0.03 |
| %T @ 500 nm | 0.03 | 15.99 | 0.01 | 0.03 |
| %T max (390 to 450 nm) | 61.54 | 82.73 | 8.95 | 38.77 |
| %T @ 370 nm | 1.06 | 31.25 | 25.78 | 45.16 |
| %T @ 360 nm | 0.60 | 19.60 | 29.34 | 43.00 |

Formulations A, C and D exhibited similar photobleaching retardation performance probably due to the quite similar light transmission characteristics in the 500-650 nm range. Formulation B provided very weak light protection.

The best protection against blue lasers corresponded to the lowest amount of transmission in the 390 to 450 nm range. Looking at Table 3, Formulation B was fully defeatable by blue laser light. Conversely, formulations A, C and D conferred some protection against blue lasers. The best protection was achieved with formulation C that transmitted less than 9% of the light in the 390 to 450 nm range (blue and blue-violet laser range).

Although all formulations allowed the bonding process to be achieved, it must be noted that formulations B, C and D were preferred in terms of bonding ability due to their higher transmission at 360-370 nm where the photocuring lamp had a maximum output.

While preferred embodiments have been shown and described, various modifications and substitutions may be made thereto without departing from the spirit and scope of the invention. Accordingly, it is to be understood that the present invention has been described by way of illustration only, and such illustrations and embodiments as have been disclosed herein are not to be construed as limiting to the claims.

## Claims

1. A method for making limited play optical storage medium for data, said method comprising providing a first substrate and a second substrate;
optionally disposing a reactive layer on said first substrate wherein a reactive material in the reactive layer is capable of changing to inhibit readability of the medium;
disposing a reflective layer on said second substrate;
optionally disposing a reactive layer on said reflective layer wherein a reactive material in the reactive layer is capable of changing to inhibit readability of the medium; and
adhering said first substrate to said second substrate such that the layers are disposed between said first substrate and said second substrate with the proviso that there is at least one reactive layer in the storage medium for data;
**characterized in that** the reactive layer comprises poly(methylmethacrylate/methacrylic acid) and polymethylmethacrylate/leuco methylene blue.

2. The method in accordance with claim 1, wherein said first substrate comprises polycarbonate.

3. A method for making limited play optical storage medium for data according to claim 1,
wherein said reactive layer is disposed on said first substate;
and wherein said reflective layer is disposed on said reactive layer.

4. A method for making a limited play optical storage medium for data, said method comprising providing a first substrate and a second substrate;
optionally disposing a reactive layer on said first substrate wherein a reactive material in the reactive layer is capable of changing to inhibit readability of the medium;
disposing a semi-reflective layer comprising gold, silver, silver alloy, silicon, or combinations thereof on said first substrate with the proviso that if the reactive layer is disposed on said first substrate, the semi-reflective layer is disposed on said reactive layer;
optionally disposing a reactive layer on said semi-reflective layer wherein a reactive material in the reactive layer is capable of changing to inhibit readability of the medium; disposing a reflective layer comprising of metal selected from silver, gold, silicon, titanium, and alloys and mixtures comprising at least one of the foregoing metals, on said second substrate;
optionally disposing a reactive layer on said reflective layer; and
adhering said first substrate to said second substrate such that the layers are disposed between said first substrate and said second substrate with the proviso that there is at least one reactive layer in said storage medium for data.
**characterized in that** the reactive layer comprises poly(methylmethacrylate/methacrylic acid) and polymethylmethacrylate/leuco methylene blue.

5. A method for making a limited play optical storage medium for data according to claim 4, wherein said first substrate and second substrate comprise polycarbonate;
wherein said reactive layer is disposed on said first polycarbonate substrate; and
wherein said semi-reflective layer is disposed on said reactive layer; and
wherein said reflective layer is disposed on said second polycarbonate substrate; and
adhering via an adhesive acrylic layer said first polycarbonate substrate to said second polycarbonate substrate such that the layers are disposed between said first polycarbonate substrate and said second polycarbonate substrate.

6. A method for making a limited play optical storage medium for data according to claim 4, wherein said first substrate and second substrate comprise polycarbonate;
wherein said semi-reflective layer is disposed on said first polycarbonate substrate;
wherein said reflective layer is disposed on said second polycarbonate substrate;
and wherein said reactive layer is disposed on said reflective layer; and
adhering via an adhesive acrylic layer said first polycarbonate substrate to said second polycarbonate substrate such that the layers are disposed between said first polycarbonate substrate and said second polycarbonate substrate.

7. The method in accordance with claim 1, wherein:
the first and second substrate comprise polycarbonate; and
said adhering is via an adhesive acrylic layer.

8. The method in accordance with claim 1, wherein said second substrate is a light-absorbing layer comprising a colorant present in a range between about 0.00001 weight % and about 2 weight % wherein the light-absorbing layer transmits more than about 5% of light in a wavelength in a range between about 330 nanometers and about 390 nanometers.

9. The method in accordance with claim 1, wherein said reactive layer further comprises at least one polyhydroxy compound present in an amount effective to retard photobleaching.

## Patentansprüche

1. Verfahren zum Herstellen von optischen Datenspeichermedien mit begrenztem Abspielvermögen, wobei das Vefahren das Bereitstellen eines ersten Substrates und eines zweiten Substrates,
wahlweises Anordnen einer reaktionsfähigen Schicht auf dem ersten Substrat, wobei ein reaktionsfähiges Material in der reaktionsfähigen Schicht zur Änderung in der Lage ist, um die Lesbarkeit des Mediums zu verhindern,
Anordnen einer reflektierenden Schicht auf dem zweiten Substrat,
wahlweises Anordnen einer reaktionsfähigen Schicht auf der reflektierenden Schicht, wobei ein reaktionsfähiges Material in der reaktionsfähigen Schicht zur Änderung in der Lage ist, um die Lesbarkeit des Mediums zu verhindern, und
Kleben des ersten Substrates an das zweiten Substrat derart, dass die Schichten zwischen dem ersten Substrat und dem zweiten Substrat angeordnet sind, unter der Bedingung, dass es mindestens eine reaktionsfähige Schicht in dem Datenspeichermedium gibt, umfasst,
**dadurch gekennzeichnet, dass** die reaktionsfähige Schicht Poly(methylmethacrylat /methacrylsäure) und Polymethylmethacrylat/Leucomethylenblau umfasst.

2. Verfahren nach Anspruch 1, worin das erste Substrat Polycarbonat umfasst.

3. Verfahren zum Herstellen von optischen Datenspeichermedien mit begrenztem Abspielvermögen nach Anspruch 1,
worin die reaktionsfähige Schicht auf dem ersten Substrat angeordnet wird und
worin die reflektierende Schicht auf der reaktionsfähigen Schicht angeordnet wird.

4. Verfahren zum Herstellen von optischen Datenspeichermedien mit begrenztem Abspielvermögen, wobei das Vefahren das Bereitstellen eines ersten Substrates und eines zweiten Substrates,
wahlweises Anordnen einer reaktionsfähigen Schicht auf dem ersten Substrat, wobei ein reaktionsfähiges Material in der reaktionsfähigen Schicht zur Änderung in der Lage ist, um die Lesbarkeit des Mediums zu verhindern,
Anordnen einer halb-reflektierenden Schicht, umfassend Gold, Silber, Silberlegierung, Silicium oder Kombinationen davon, auf dem ersten Substrat, unter der Bedingung, dass, wenn die reaktionsfähige Schicht auf dem ersten Substrat angeordnet ist, die halb-reflektierende Schicht auf der reaktionsfähigen Schicht angeordnet ist,
wahlweises Anordnen einer reaktionsfähigen Schicht auf der halb-reflektierenden Schicht, wobei ein reaktionsfähiges Material in der reaktionsfähigen Schicht zur Änderung in der Lage ist, um die Lesbarkeit des Mediums zu verhindern,
Anordnen einer reflektierenden Schicht, umfassend Metall, ausgewählt aus Silber, Gold, Silicium, Titan und Legierungen und Mischungen, die mindestens eines der vorhergehenden Metalle umfassen, auf dem zweiten Substrat,
wahlweises Anordnen einer reaktionsfähigen Schicht auf der reflektierenden Schicht und
Kleben des ersten Substrates an das zweiten Substrat derart, dass die Schichten zwischen dem ersten Substrat und dem zweiten Substrat angeordnet sind, unter der Bedingung, dass es mindestens eine reaktionsfähige Schicht in dem Datenspeichermedium gibt, umfasst,
**dadurch gekennzeichnet, dass** die reaktionsfähige Schicht Poly(methylmethacrylat /methacrylsäure) und Polymethylmethacrylat/Leucomethylenblau umfasst.

5. Verfahren zum Herstellen von optischen Datenspeichermedien mit begrenztem Abspielvermögen nach Anspruch 4, worin das erste Substrat und zweite Substrat Polycarbonat umfassen,
worin die reaktionsfähige Schicht auf dem ersten Polycarbonat-Substrat angeordnet wird,
worin die halb-reflektierende Schicht auf der reaktionsfähigen Schicht angeordnet wird und
Kleben des ersten Polycarbonat-Substrates mittels einer Acrylklebstoff-Schicht an das zweite Polycarbonat-Substrat derart, dass die Schichten zwischen dem ersten Polycarbonat-Substrat und dem zweiten Polycarbonat-Substrat angeordnet sind.

6. Verfahren zum Herstellen von optischen Datenspeichermedien mit begrenztem Abspielvermögen nach Anspruch 4, worin das erste Substrat und zweite Substrat Polycarbonat umfassen,
worin die halb-reflektierende Schicht auf dem ersten Polycarbonat-Substrat angeordnet wird,
worin die reaktionsfähige Schicht auf der reflektierenden Schicht angeordnet wird und
Kleben des ersten Polycarbonat-Substrates mittels einer Acrylklebstoff-Schicht an das zweite Polycarbonat-Substrat derart, dass die Schichten zwischen dem ersten Polycarbonat-Substrat und dem zweiten Polycarbonat-Substrat angeordnet sind.

7. Verfahren nach Anspruch 1, worin das erste und das zweite Substrat Polycarbonat umfassen und
das Kleben mittels einer Acrylklebstoff-Schicht erfolgt.

8. Verfahren nach Anspruch 1, worin das zweite Substrat eine lichtabsorbierende Schicht ist, die ein Färbemittel umfasst, das in einem Bereich zwischen etwa 0,00001 Gew.-% und etwa 2 Gew.-% vorhanden ist, wobei die lichtabsorbierende Schicht mehr als etwa 5% Licht einer Wellenlängen in einem Bereich zwischen etwa 330 nm und etwa 390 nm überträgt.

9. Verfahren nach Anspruch 1, worin die reaktionsfähige Schicht weiter mindestens eine Polyhydroxyverbindung umfasst, die in einer Menge vorhanden ist, die wirksam das Photobleichen verzögert.

## Revendications

1. Procédé de fabrication d'un milieu de stockage optique de données à lecture limitée, lequel procédé comporte les étapes suivantes :
- prendre un premier substrat et un deuxième substrat ;
- en option, disposer sur ledit premier substrat une couche réactive dans laquelle se trouve un matériau réactif qui est capable de changer de manière à empêcher la lecture du milieu ;
- disposer une couche réfléchissante sur ledit deuxième substrat ;
- en option, disposer sur ladite couche réfléchissante une couche réactive dans laquelle se trouve un matériau réactif qui est capable de changer de manière à empêcher la lecture du milieu ;
- et faire adhérer ledit premier substrat audit deuxième substrat, de telle façon que les couches soient disposées entre ledit premier substrat et ledit deuxième substrat, étant entendu qu'il y a au moins une couche réactive dans le milieu de stockage de données ;
et lequel procédé est **caractérisé en ce que** la couche réactive comprend un poly(méthacrylate de méthyle / acide méthacrylique) et un poly(méthacrylate de méthyle) / leuco-dérivé de bleu de méthylène.

2. Procédé conforme à la revendication 1, dans lequel ledit premier substrat comprend un polycarbonate.

3. Procédé de fabrication d'un milieu de stockage optique de données à lecture limitée, conforme à la revendication 1, dans lequel :
- ladite couche réactive est disposée sur ledit premier substrat,
- et ladite couche réfléchissante est disposée sur ladite couche réactive.

4. Procédé de fabrication d'un milieu de stockage optique de données à lecture limitée, lequel procédé comporte les étapes suivantes :
- prendre un premier substrat et un deuxième substrat ;
- en option, disposer sur ledit premier substrat une couche réactive dans laquelle se trouve un matériau réactif qui est capable de changer de manière à empêcher la lecture du milieu ;
- disposer sur ledit premier substrat une couche semi-réfléchissante comprenant de l'or, de l'argent, un alliage d'argent, du silicium ou une combinaison de ces matériaux, étant entendu que, s'il y a une couche réactive disposée sur ce premier substrat, la couche semi-réfléchissante est disposée par-dessus cette couche réactive ;
- en option, disposer sur ladite couche semi-réfléchissante une couche réactive dans laquelle se trouve un matériau réactif qui est capable de changer de manière à empêcher la lecture du milieu ;
- disposer sur ledit deuxième substrat une couche réfléchissante comprenant un métal choisi parmi de l'argent, de l'or, du silicium, du titane et les alliages ou mélanges comprenant au moins l'un de ces métaux ;
- en option, disposer une couche réactive sur ladite couche réfléchissante ;
- et faire adhérer ledit premier substrat audit deuxième substrat, de telle façon que les couches soient disposées entre ledit premier substrat et ledit deuxième substrat, étant entendu qu'il y a au moins une couche réactive dans ledit milieu de stockage de données ; et lequel procédé est **caractérisé en ce que** la couche réactive comprend un poly(méthacrylate de méthyle / acide méthacrylique) et un poly(méthacrylate de méthyle) / leuco-dérivé de bleu de méthylène.

5. Procédé de fabrication d'un milieu de stockage optique de données à lecture limitée, conforme à la revendication 4, dans lequel :
- ledit premier substrat et ledit deuxième substrat comprennent un polycarbonate,
- ladite couche réactive est disposée sur ledit premier substrat en polycarbonate,
- ladite couche semi-réfléchissante est disposée par-dessus ladite couche réactive,
- ladite couche réfléchissante est disposée sur ledit deuxième substrat en polycarbonate,
- et c'est à l'aide d'une couche d'adhésif polyacrylique qu'on fait adhérer ledit premier substrat en polycarbonate audit deuxième substrat en polycarbonate, de telle façon que les couches soient disposées entre ledit premier substrat en polycarbonate et ledit deuxième substrat en polycarbonate.

6. Procédé de fabrication d'un milieu de stockage optique de données à lecture limitée, conforme à la revendication 4, dans lequel :
- ledit premier substrat et ledit deuxième substrat comprennent un polycarbonate,
- ladite couche semi-réfléchissante est disposée sur ledit premier substrat en polycarbonate,
- ladite couche réfléchissante est disposée sur ledit deuxième substrat en polycarbonate,
- ladite couche réactive est disposée par-dessus ladite couche réfléchissante,
- et c'est à l'aide d'une couche d'adhésif polyacrylique qu'on fait adhérer ledit premier substrat en polycarbonate audit deuxième substrat en polycarbonate, de telle façon que les couches soient disposées entre ledit premier substrat en polycarbonate et ledit deuxième substrat en polycarbonate.

7. Procédé conforme à la revendication 1, dans lequel :
- les premier et deuxième substrats comprennent un polycarbonate,
- et ladite adhésion est réalisée au moyen d'une couche d'adhésif polyacrylique.

8. Procédé conforme à la revendication 1, dans lequel ledit deuxième substrat est une couche photo-absorbante qui comprend un colorant, présent en une proportion d'environ 0,00001 % en poids à environ 2 % en poids, laquelle couche photo-absorbante transmet plus d'environ 5 % de la lumière à une longueur d'onde située dans l'intervalle allant d'environ 330 nanomètres à environ 390 nanomètres.

9. Procédé conforme à la revendication 1, dans lequel ladite couche réactive comprend en outre au moins un composé polyhydroxylé, présent en une telle quantité qu'il a pour effet de retarder le photoblanchiment.
